(19) Europäisches Patentamt
European Patent Office
Office européen des brevets

(11) **EP 2 966 530 A1**

(12) **EUROPEAN PATENT APPLICATION**
published in accordance with Art. 153(4) EPC

(43) Date of publication:
**13.01.2016 Bulletin 2016/02**

(51) Int Cl.:
**G05D 3/00** (2006.01) **G01C 19/02** (2006.01)
**G05B 11/36** (2006.01)

(21) Application number: **14760397.1**

(22) Date of filing: **04.03.2014**

(86) International application number:
**PCT/JP2014/001173**

(87) International publication number:
**WO 2014/136435 (12.09.2014 Gazette 2014/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **07.03.2013 JP 2013045561**

(71) Applicant: **NEC Corporation
Tokyo 108-8001 (JP)**

(72) Inventor: **SHIMIZU, Motoaki
Tokyo 108-8001 (JP)**

(74) Representative: **Vossius & Partner
Patentanwälte Rechtsanwälte mbB
Siebertstrasse 3
81675 München (DE)**

(54) **SPACE STABILIZING DEVICE AND SPACE STABILIZATION METHOD**

(57) Provided are: a state detection unit that detects an azimuth angle of a controlled object and outputs the angle as a detected angle signal, and detects sway of a support body or a controlled object and outputs the sway as a sway angular velocity signal; a target angle setting unit that generates and outputs a target angle command to provide instructions for making the controlled object face a predetermined target using the sway angular velocity signal; a sign inversion unit that reverse a sign of a sway angular velocity signal and output it as a target angular velocity command; and a control unit that generates a control signal for controlling the controlled object based on the target angle command, the detected angle signal and the target angular velocity command.

Fig. 1

# Description

[Technical Field]

The present invention relates to a space stabilizing device and a space stabilization method.

[Background Art]

There are cases where a controlled object such as a radar is made to turn to a target to carry out tracking and the like of the target. In such cases, tracking accuracy depends on how accurately a controlled object faces a desired direction.

However, on the occasion of performing rotational control of a support body which supports a controlled object, the support body and the controlled object may sway by a moment of inertia of such as the support body and the controlled object. Accordingly, corrective control of such sway of a controlled object is conducted using a space stabilizing device.

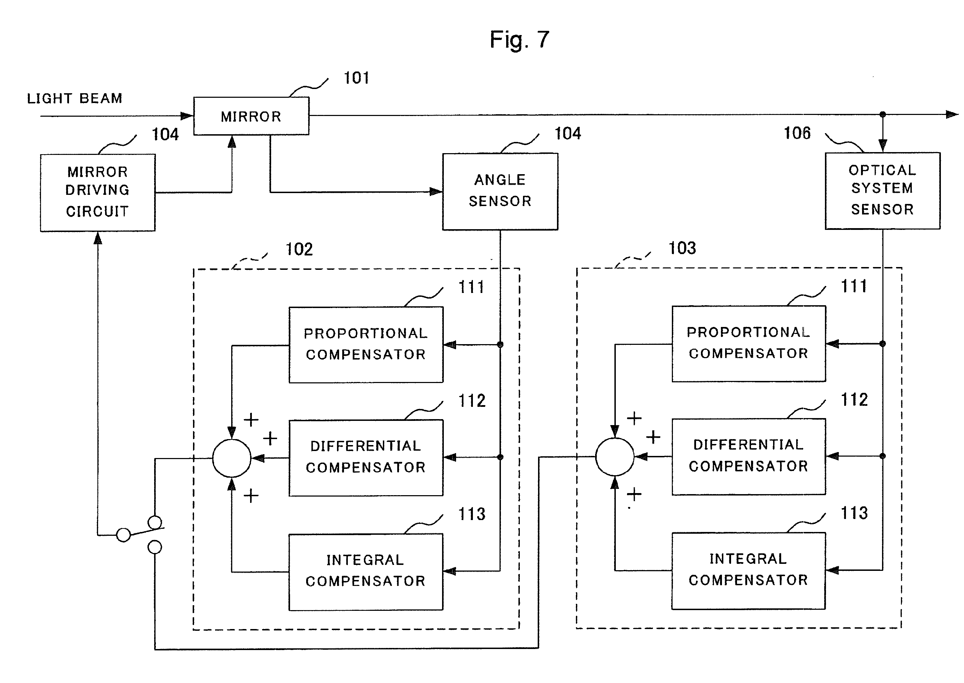

For example, in Japanese Patent Application Laid-Open No. 1990-287274, a light beam capture and tracking control apparatus as shown in Fig. 7 is disclosed. This light beam capture and tracking control apparatus detects an inclined angle and the like of a mirror 101 by an angle sensor 105 and an optical system sensor 106, and, based on this detected signal, PID controllers 102 and 103 control the mirror 101 by driving a mirror driving circuit 104. The PID control is a publicly known control method, and is used in order to cancel a difference between a detected signal and a target signal promptly by a proportional compensator 111, a differential compensator 112 and an integral compensator 113.

[Citation List]

[Patent Literature]

Patent document 1: Japanese Patent Application Laid-Open No. 1990-287274

[Summary of Invention]

[Technical Problem]

However, in the control method disclosed in Japanese Patent Application Laid-Open No. 1990-287274, the differential compensator 112 behave in a manner to suppress the difference reduction control by the proportional compensator 111 and the integral compensator 113. Therefore, the value of a control signal to the mirror driving circuit 104 becomes smaller than a value detected by the angle sensor or the optical system sensor. Accordingly, when a controlled object such as a mirror is swaying by the moment of inertia, there is a problem that this cannot be suppressed with a high degree of accuracy.

Accordingly, a main purpose of the present invention is to provide a space stabilizing device and a space stabilization method which can correct sway of a controlled object correctly and improve spatial stability.

[Solution to Problem]

In order to settle the above-mentioned problem, the invention concerning a space stabilizing device to control an angle of rotation of a controlled object to a support body, the support body supporting the controlled object in a rotatable manner, includes: an angle output means for detecting an angle of the controlled object to the support body, and outputting a detected angle; a sway angular velocity output means for detecting sway of one of the support body and the controlled object, and outputting a detected sway angular velocity; a target angle calculating means for calculating a target angle of the controlled object using the detected sway angular velocity; a sign inversion means for reversing a sign of the detected sway angular velocity, and outputting as a target angular velocity; and a control means for generating a control signal for controlling the controlled object based on the target angle, the detected angle and the target angular velocity.

The invention concerning a space stabilization method to control an angle of rotation of a controlled object to a support body, the support body supporting the controlled object in a rotatable manner, includes: a step of detecting an angle of the controlled object to the support body, and outputting a detected angle;
a step of detecting sway of one of the support body and the controlled object, and outputting a detected sway angular velocity;
a step of calculating a target angle of the controlled object using the detected sway angular velocity;
a step of inverting a sign of the detected sway angular velocity, and outputting as a target angular velocity; and
a step of generating a control signal for controlling the controlled object based on the target angle, the detected angle and the target angular velocity.

[Advantageous Effects of Invention]

According to the present invention, the space stabilization performance is improved, because not only a sway angle signal which is an integration result of outputs of an inertial sensor but also a sway angular velocity are used for a target command for realizing space stability of a controlled object.

[Brief Description of Drawings]

Fig. 1 is a block diagram showing a space stabilizing device of a first exemplary embodiment of the present invention;

Fig. 2 is a detailed block diagram of a control unit;

Fig. 3A is a diagram illustrating a waveform of a sway angle signal;

Fig. 3B is a diagram illustrating a waveform of a target angle command;

Fig. 3C is a diagram illustrating a differential waveform of a target angle command;

Fig. 3D is a diagram illustrating an output waveform from a differentiator;

Fig. 3E is a diagram illustrating a waveform of a detected angle signal;

Fig. 4 is a flow chart showing space stabilization control;

Fig. 5 is a block diagram of a space stabilizing device according to a second exemplary embodiment of the present invention;

Fig. 6 is a block diagram of a space stabilizing device of another constitution; and

Fig. 7 is a block diagram of a light beam capture and tracking control apparatus applied to description of related technology.

[Description of Embodiments]

<First exemplary embodiment>

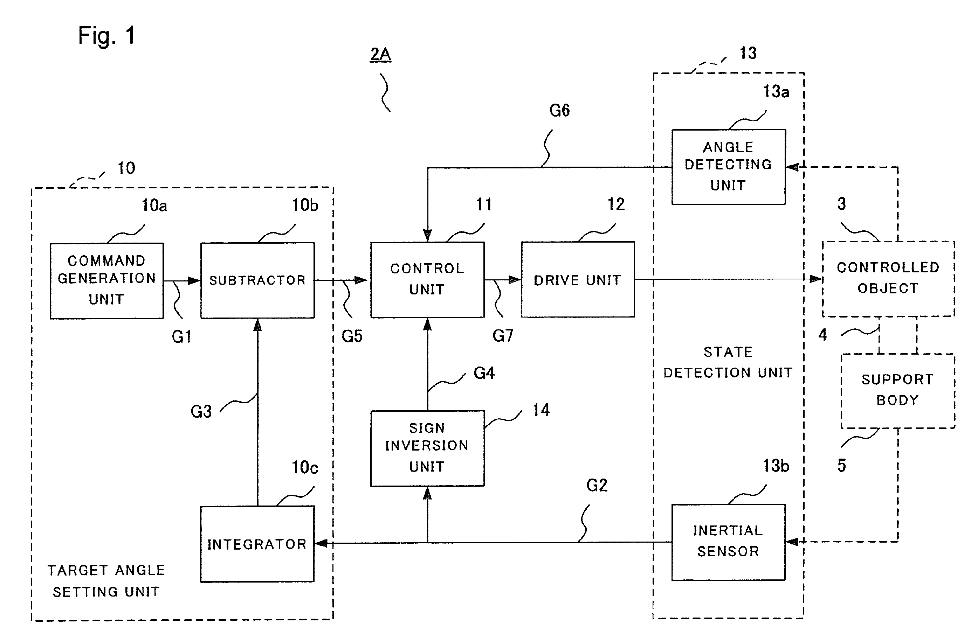

The first exemplary embodiment of the present invention will be described. Fig. 1 is a block diagram of a space stabilizing device 2A according to an exemplary embodiment of the present invention. This space stabilizing device 2A performs rotational control of the rotation azimuth of a controlled object 3 about the rotating shaft of one axis.

In the following description, the space stabilizing device 2A will be described about a case where spatial stability is achieved by PID (Proportional Integral Derivative) control. However, it is added in advance that it may be also applicable in other control methods such as H∞ (H-infinity) control, for example. In addition, although the controlled object 3 such as gimbals will be described about the case where it is connected to a support body 5, such as a flying object, rotatably about one rotating shaft 4, it is not limited to a rotating shaft etc. of one axis, and may be of rotating shafts etc. of two axes or more.

The space stabilizing device 2A includes a target angle setting unit 10, a control unit 11, a drive unit 12, a state detection unit 13 and a sign inversion unit 14. The target angle setting unit 10 includes a command generation unit 10a, a subtractor 10b and an integrator 10c. The state detection unit 13 includes an angle detecting unit 13a and an inertial sensor 13b.

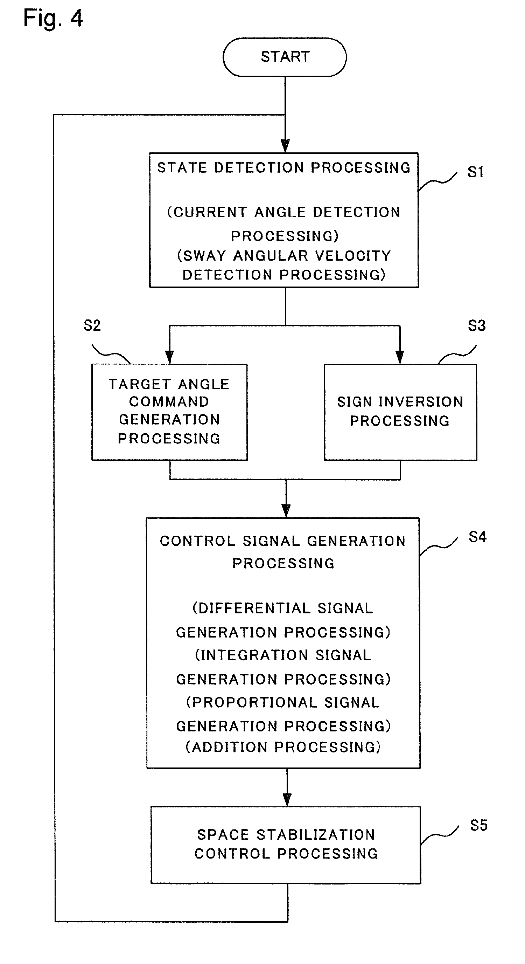

This space stabilizing device 2A conducts space stabilization control by a procedure as shown in Fig. 4. This control procedure will be described along with operations of each element.

Step S1: First, information such as the current angle and the angular velocity of the controlled object or the support body is detected. This information is acquired by the state detection unit 13, and includes detection processing of a detected angle and detection processing of a sway angular velocity.

The angle detecting unit 13a in the state detection unit 13 performs the detection processing of a detected angle. That is, the angle detecting unit 13a detects the rotation angle of the controlled object 3 to the support body 5 about the rotating shaft 4, and outputs it to the control unit 11 as a detected angle signal G6.

The sway angular velocity detection processing is performed by the inertial sensor 13b. This inertial sensor 13b detects sway (an angular velocity) about the rotating shaft 4 that occurs in the support body 5, and outputs it to the integrator 10c and the sign inversion unit 14 as a sway angular velocity signal G2.

Step S2: Next, the target angle setting unit 10 performs target-angle-command generation processing, and outputs a target angle command G5. In other words, the command generation unit 10a in the target angle setting unit 10 generates a target angle signal G1 which indicates a rotation angle for turning the controlled object 3 to a target, and outputs it to the subtractor 10b.

By integrating the sway angular velocity signal G2 from the inertial sensor 13b, the integrator 10c converts this sway angular velocity signal G2 into a sway angle signal G3, and outputs it to the subtractor 10b.

The subtractor 10b subtracts the sway angle signal G3 from the target angle signal G1. Then, a signal obtained by the subtraction is outputted to the control unit 11 as the target angle command G5.

Step S3: Next, sign inversion processing is performed by the sign inversion unit 14, and a target angular velocity command G4 is outputted. That is, the sign inversion unit 14 generates a signal made by reversing the sign of the sway angular velocity signal G2, and outputs this to the control unit 11 as the target angular velocity command G4.

Meanwhile, the above-mentioned Step S2 and Step S3 are pieces of parallel processing, and they may be carried out in any order in the processing procedure.

Step S4: Next, control signal generation processing is performed by the control unit 11. The target angle command G5, the detected angle signal G6 and the target angular velocity command G4 are inputted to the control unit 11, and a control signal G7 is generated using these signals and outputted to the drive unit 12.

Step S5: Then, the drive unit 12 performs rotational control and stabilization control of the controlled object 3 based on the control signal G7 from the control unit 11.

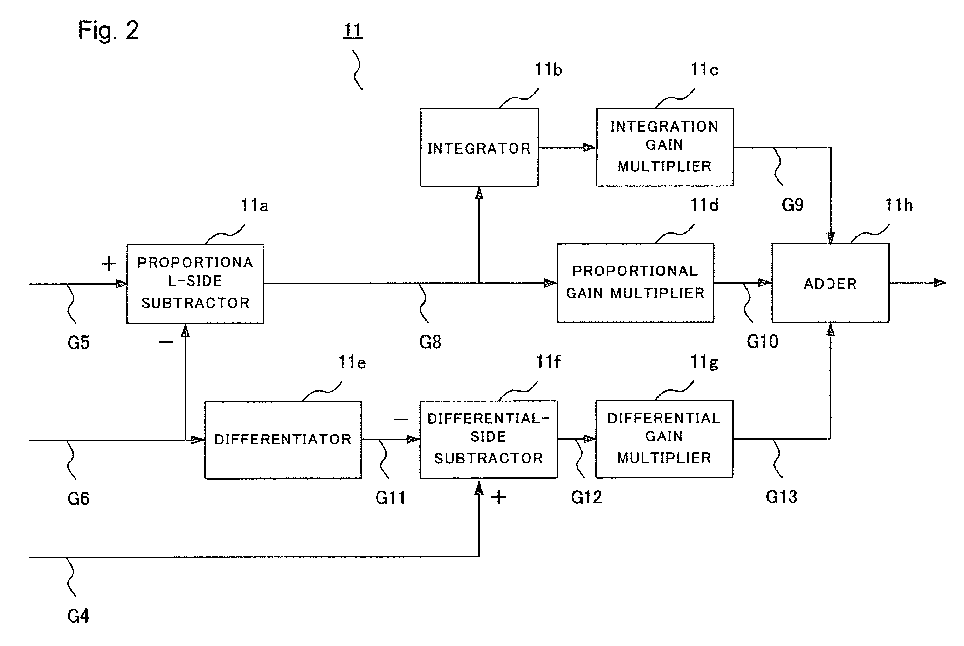

Fig. 2 is a detailed block diagram of the control unit 11. The control unit 11 includes a proportional-side subtractor 11a, an integrator 11b, an integration gain multiplier 11c, a proportional gain multiplier 11d, a differentiator 11e, a differential-side subtractor 11f, a differential gain multiplier 11g and an adder 11h.

Although the control unit 11 performs control signal generation processing as mentioned above, this control signal generation processing includes differential signal generation processing, integration signal generation processing, proportional signal generation processing and addition processing.

The proportional-side subtractor 11a generates a difference signal G8 which is made by subtracting the detected angle signal G6 from the target angle command G5, and outputs this to the integrator 11b and the proportional gain multiplier 11d. The proportional gain multiplier 11d multiplies the difference signal G8 by a predetermined proportional gain, and outputs this to the adder 11h as a proportional signal G10 (proportional signal generation processing).

On the other hand, the integrator 11b integrates the difference signal G8, and outputs it to the integration gain multiplier 11c. The integration gain multiplier 11c multiplies the signal from the integrator 11b by a predetermined integration gain, and outputs it to the adder 11h as an integration signal G9 (integration signal generation processing).

Further, the differentiator 11e differentiates the detected angle signal G6, and outputs it to the differential-side subtractor 11f as a detected angular velocity signal G11.

The differential-side subtractor 11f subtracts the detected angular velocity signal G11 from the target angular velocity command G4, and outputs this to the differential gain multiplier 11g as a subtraction signal G12. The differential gain multiplier 11g multiplies the subtraction signal G12 by a predetermined differential gain, and outputs it to the adder 11h as a differential signal G13 (differential signal generation processing).

The adder 11h adds the integration signal G9, the proportional signal G10 and the differential signal G13, and outputs the result as the control signal G7 (addition processing).

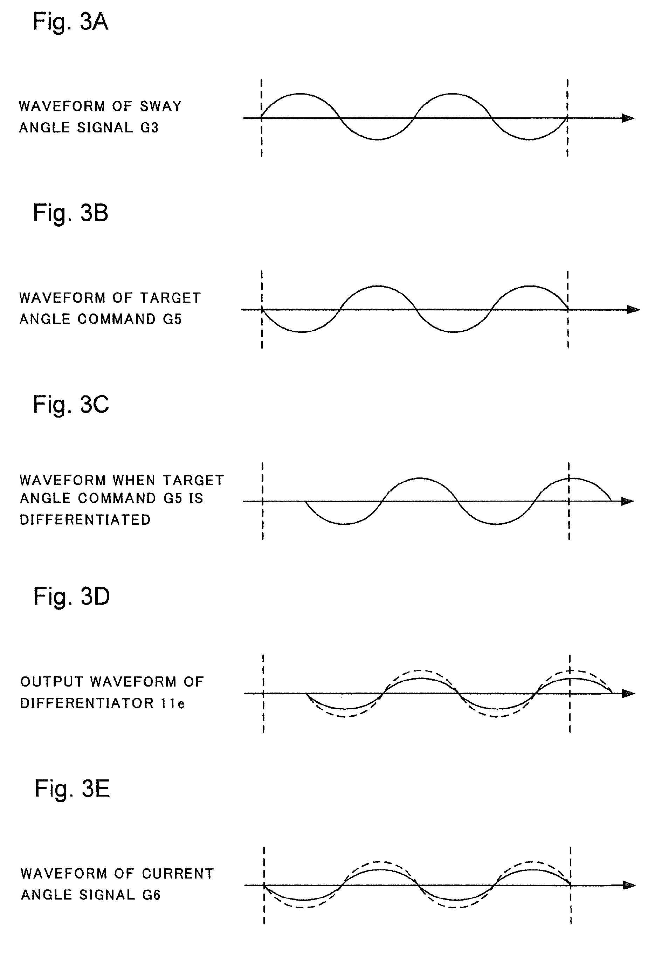

The principle of a spatial stability improvement by such structure will be described with reference to Figs. 3A-3E. Fig. 3A shows a waveform of the sway angle signal G3, Fig. 3B a waveform of the target angle command G5, Fig. 3C a differential waveform of the target angle command G5, Fig. 3D an output waveform from the differentiator 11e, and Fig. 3E a waveform of the detected angle signal G6. The target angular velocity command G4 will be a waveform corresponding to an output waveform from the differentiator 11e indicated by a dotted line in Fig. 3D.

Meanwhile, for simplicity of description, the target angle signal G1 from the command generation unit 10a is made to be "0" below. This is control to make the controlled object 3 maintain the current position without making it rotate to a new position. In other words, this means that, when the controlled object 3 is swaying at a detected position, it is made to be stabilized by correcting this sway.

The sway angle signal G3 shown in Fig. 3A inputted to the subtractor 10b will be the waveform of the target angle command G5 shown in Fig. 3B of a reversed sign as a result of subtracting it from the target angle signal G1 of "0". A waveform of an angular velocity when assuming that this target angle command G5 has been differentiated is shown in Fig. 3C.

If the target angular velocity command G4 is "0", angular velocity control by differential control by the differentiator 11e, the differential gain multiplier 11g and the adder 11h works so as to make the waveform of Fig. 3A be "0". The case where this target angular velocity command G4 is "0" corresponds to a structure in which the sign inversion unit 14 of Fig. 1 is not provided, and this structure is the circuit configuration of the publicly known PID control. That is, in the publicly known PID control, the target angular velocity command G4 is not used.

In the case of the publicly known PID control, differential control acts in a manner suppressing proportional control, and, therefore, a signal having an amplitude smaller than that of Fig. 3C (the solid line curve in Fig. 3D) is outputted from the differentiator 11e. Accordingly, although, in essence, sway can be corrected completely when conducting the control by a signal of the dotted line curve of Fig. 3D, in reality, the sway cannot be corrected completely because a signal of a solid line curve line comes to be outputted due to differential control functioning.

Therefore, in the present invention, the target angular velocity command G4 that is the sign-inverted signal of the sway angular velocity signal G2 is employed, and the subtraction signal G12 is generated by obtaining a difference with a signal of the differentiator 11e using this target angular velocity command G4. By this, the subtraction signal G12 inputted to the differential gain multiplier 11g will be a signal of the amplitude values indicated by the dotted line curve of Fig. 3D.

As a result, from the adder 11h, a signal that controls a detected angle signal of the controlled object 3 to the amplitude values and phases shown in Fig. 3B is outputted as the control signal G7. Accordingly, improvement of the performance of cancelling sway becomes possible, and the space stabilization performance is improved.

<Second exemplary embodiment>

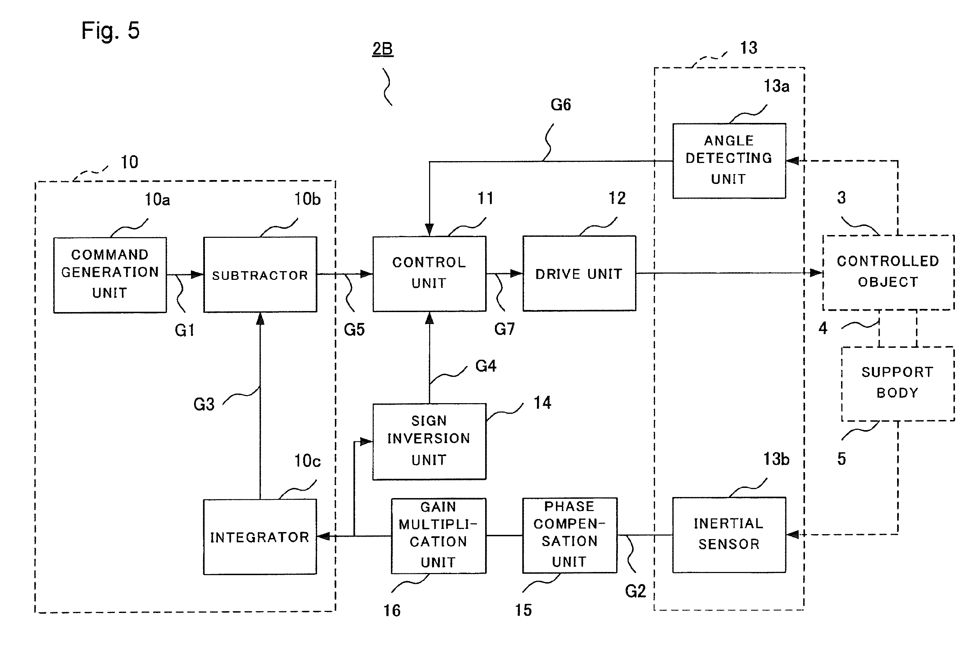

Next, the second exemplary embodiment of the present invention will be described. Fig. 5 is a block diagram of a space stabilizing device 2B according to this exemplary embodiment. Meanwhile, description will be omitted appropriately using identical codes about the same structures as those of the first exemplary embodiment.

The space stabilizing device 2B according to this exemplary embodiment is provided with, when compared with the space stabilizing device 2A according to the first exemplary embodiment, a phase compensation unit 15 and a gain multiplication unit 16 between an inertial sensor 13b and a sign inversion unit 14 (or integrator 10c) so as to be able to adjust phase and amplitude values of the sway angular velocity signal G2. A relative positional relationship between the phase compensation unit 15 and the gain multiplication unit 16 is not limited in particular. In below, description will be made taking the case where the phase compensation unit 15 and the gain multiplication unit 16 are arranged in this order from the side of the inertial sensor 13b as an example.

The phase compensation unit 15 performs filtering processing according to a transmission function F indicated by the following formula, for example.

$$F = (s + 2\pi f_1)/(s + 2\pi f_2) \ \dots \ (1)$$

By this, the phase compensation unit 15 changes the phase of an input signal according to frequencies set in advance, and outputs the changed signal. Here, $f_1$ and $f_2$ are frequencies which can be set by a user optionally, and s is a Laplace operator.

If the amplitude value and the phase of a sway angle of the support body 5 and an angle obtained by reversing the sign of an angle of the controlled object 3 (it is described as a sway correction angle) are identical, sway of the support body 5 can be suppressed by controlling the controlled object 3.

however, because there are limitations in detection bands of the inertial sensor 13b and there occurs a signal delay and the like, an amplitude difference and a phase difference are caused between the sway of the support body 5 and the output of the inertial sensor 13b. In addition, attenuation and a phase difference also arise in the signaling channel from the output of the inertial sensor 13b to the controlled object 3.

Accordingly, in order to correct a phase difference, the phase compensation unit 15 is provided so as to be able to perform a phase adjustment of the sway angular velocity signal G2 detected by the inertial sensor 13b; and, in order to correct an amplitude difference, the gain multiplication unit 16 is provided so as to be able to perform amplitude adjustment of the sway angular velocity signal G2.

By providing the phase compensation unit 15 mentioned above, a sway inhibiting effect for the controlled object 3 can be improved because the phase of the sway angular velocity signal G2 can be brought close to the phase of the sway of the support body 5. By providing the gain multiplication unit 16 mentioned above, sway inhibiting effect for the controlled object 3 can be improved because the amplitude of the sway angular velocity signal G2 can be brought close to the amplitude of the sway of the support body 5.

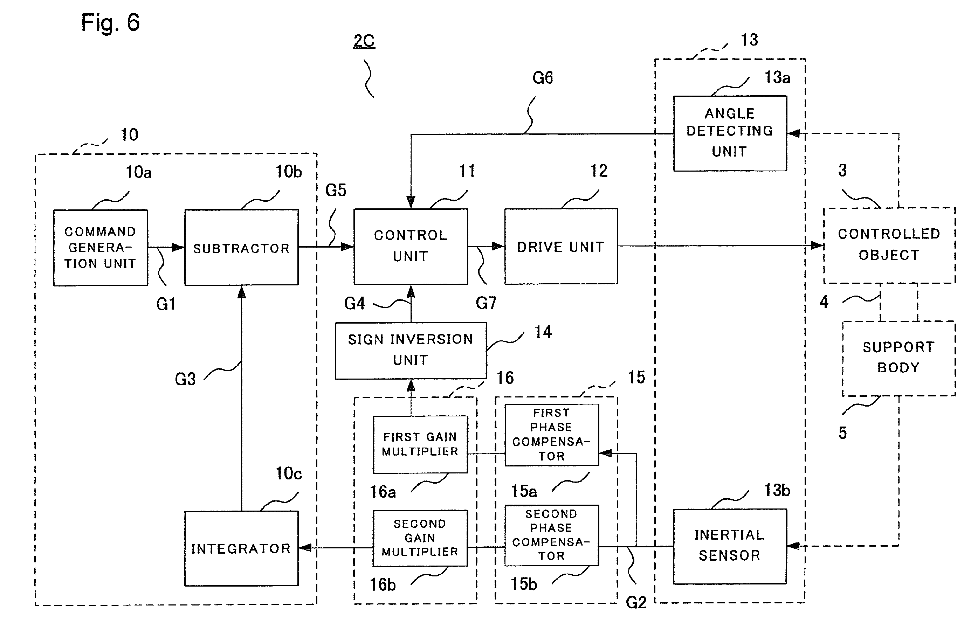

Meanwhile, in the aforementioned constitution, the sway angular velocity signal G2 to be inputted to the integrator 10c and the sign inversion unit 14 is the same signal adjusted to the same phase quantity and the same amplitude volume. However, the present invention is not limited to this, and it may be such that the respective pieces of sway angular velocity signal G2 inputted to the integrator 10c and the sign inversion unit 14 can be adjusted in accordance with their signaling channels as shown in Fig. 6.

Specifically, in a space stabilizing device 2C shown in Fig. 6, the phase compensation unit 15 is formed by a first phase compensator 15a and a second phase compensator 15b, and the gain multiplication unit 16 is formed by a first gain multiplier 16a and a second gain multiplier 16b.

The sway angular velocity signal G2 from the inertial sensor 13b is inputted to the first phase compensator 15a, and the first phase compensator 15a corrects the phase difference of the sway angular velocity signal G2. The sway angular velocity signal for which a phase difference has been corrected is inputted to the first gain multiplier 16a, and the first gain multiplier 16a adjusts the amplitude of the sway angular velocity signal. The sway angular velocity signal corrected by the first phase compensator 15a and the first gain multiplier 16a is inputted to the sign inversion unit 14. The sway angular velocity signal G2 from the inertial sensor 13b is inputted to the second phase compensator 15b, and the second phase compensator 15b corrects the phase difference of the sway angular velocity signal G2. The sway angular velocity signal for which a phase difference has been corrected is inputted to the second gain multiplier 16b, and the second gain multiplier 16b adjusts the amplitude of the sway angular velocity signal. The sway angular velocity signal corrected by the second phase compensator 15b and the second gain multiplier 16b is inputted to the integrator 10c.

By the structure described above, it becomes possible to make the amplitude and phase of a sway angle of the support body 5 and the amplitude and phase of a sway correction angle of the controlled object 3 be identical completely, respectively, and sway of the support body 5 can be suppressed by controlling the controlled object 3, resulting in further improvement of spatial stability.

Although the present invention has been described with reference to exemplary embodiments (and examples) above, the present invention is not limited to the above-mentioned exemplary embodiments (and examples). Various changes which a person skilled in the art can understand in the scope of the present invention can be performed in the composition and details of the present invention.

This application claims priority based on Japanese application Japanese Patent Application No. 2013-045561, filed on March 7, 2013, the disclosure of which is incorporated herein in its entirely by reference.

[Reference signs List]

2A-2C  Space stabilizing device
3      Controlled object
4      Rotating shaft
5      Support body
10     Target angle setting unit
10a    Command generation unit
10b    Subtractor
10c    Integrator
11     Control unit
11a    Proportional side subtractor
11b    Integrator
11c    Integration gain multiplier
11d    Proportional gain multiplier
11e    Differentiator
11f    Differential-side subtractor
11g    Differential gain multiplier
11h    Adder
12     Drive unit
13     State detection unit
13a    Angle detecting unit
13b    Inertial sensor
14     Sign inversion unit
15     Phase compensation unit
15a    First phase compensator
15b    Second phase compensator
16     Gain multiplication unit
16a    First gain multiplier
16b    Second gain multiplier
G1     Target angle signal
G2     Sway angular velocity signal
G3     Sway angle signal
G4     Target angular velocity command
G5     Target angle command
G6     Detected angle signal
G7     Control signal
G8     Difference signal
G9     Integration signal
G10    Proportional signal G10
G11    Detected angular velocity signal
G12    Subtraction signal
G13    Differential signal

**Claims**

1. A space stabilizing device to control an angle of rotation of a controlled object to a support body, the support body supporting the controlled object in a rotatable manner, comprising
an angle output means for detecting an angle of the controlled object to the support body, and outputting a detected angle signal;
a sway angular velocity output means for detecting sway of one of the support body and the controlled object, and outputting a detected sway angular velocity signal;
a target angle calculating means for calculating a target angle of the controlled object using the detected sway angular velocity signal;
a sign inversion means for reversing a sign of the detected sway angular velocity signal, and outputting the inverted detected sway angular velocity signal as a target angular velocity signal; and
a control means for generating a control signal for controlling the controlled object based on the target angle signal, the detected angle signal and the target angular velocity signal.

2. The space stabilizing device according to claim 1, wherein
the control unit, comprises:

   a differentiation means for differentiating a function obtained by the detected angle signal, and outputting as a detected angular velocity signal; and
   a proportional side subtracting means for subtracting the detection angular velocity from said target angle.

3. The space stabilizing device according to claims 1 or 2, further comprising:

   a phase compensation means for adjusting a phase of the detected sway angular velocity; and
   a gain multiplication means for adjusting an amplitude of the detected sway angular velocity.

4. The space stabilizing device according to claim 3, wherein
the phase compensation means comprises:

   a first phase compensation means for adjusting a phase of the detected sway angular velocity inputted to the sign inversion unit; and
   a second phase compensation means for adjusting a phase of the detected sway angular velocity inputted to the target angle calculating means, and wherein
   the gain multiplication means comprises:

      a first gain multiplication means for adjusting an amplitude of the detected sway angular velocity inputted to the sign inversion unit; and
      a second gain multiplication means for adjusting an amplitude of the detected sway angular velocity inputted to the target angle calculating means.

5. A space stabilization method to control an angle of rotation of a controlled object to a support body, the support body supporting the controlled object in a rotatable manner, comprising the steps of:

   detecting an angle of the controlled object to the support body, and outputting a detected angle; detecting sway of one of the support body and the controlled object, and outputting a detected sway angular velocity;

calculating a target angle of the controlled object using the detected sway angular velocity;

inverting a sign of the detected sway angular velocity, and outputting as a target angular velocity; and

generating a control signal for controlling the controlled object based on the target angle, the detected angle and the target angular velocity.

6. The space stabilization method according to claim 5, further comprising the steps of:

> when generating the control signal, at least differentiating the detected angle and outputting as a detection angular velocity; and subtracting the detection angular velocity from the target angle.

7. The space stabilization method according to claims 5 or 6, further comprising the steps of:

> adjusting a phase of a detected sway angular velocity obtained by outputting the detected sway angular velocity; and adjusting an amplitude of the detected sway angular velocity.

8. The space stabilization method according to claim 7, further comprising the steps of:

> on an occasion of adjusting the phase, adjusting a phase of the detected sway angular velocity as well as adjusting a phase of the detected sway angular velocity; and.
> on an occasion of adjusting the amplitude, adjusting an amplitude of the detected sway angular velocity, and adjusting an amplitude of the detected sway angular velocity.

Fig. 1

2A

EP 2 966 530 A1

Fig. 2

EP 2 966 530 A1

Fig. 3A

WAVEFORM OF SWAY
ANGLE SIGNAL G3

Fig. 3B

WAVEFORM OF TARGET
ANGLE COMMAND G5

Fig. 3C

WAVEFORM WHEN TARGET
ANGLE COMMAND G5 IS
DIFFERENTIATED

Fig. 3D

OUTPUT WAVEFORM OF
DIFFERENTIATOR 11e

Fig. 3E

WAVEFORM OF CURRENT
ANGLE SIGNAL G6

## Fig. 4

```
                    ┌──────────────┐
                    │    START     │
                    └──────┬───────┘
                           │
                           ▼
         ┌─────────────────────────────────┐
         │   STATE DETECTION PROCESSING     │  ⟋ S1
         │                                  │
         │   (CURRENT ANGLE DETECTION       │
         │         PROCESSING)              │
         │   (SWAY ANGULAR VELOCITY         │
         │    DETECTION PROCESSING)         │
         └─────────────────────────────────┘
              │                      │
    S2        ▼                      ▼        S3
  ┌──────────────────┐      ┌──────────────────┐
  │  TARGET ANGLE    │      │                  │
  │    COMMAND       │      │  SIGN INVERSION  │
  │   GENERATION     │      │   PROCESSING     │
  │   PROCESSING     │      │                  │
  └──────────────────┘      └──────────────────┘
              │                      │
              └──────────┬───────────┘
                         ▼
       ┌───────────────────────────────────┐
       │  CONTROL SIGNAL GENERATION         │  ⟋ S4
       │          PROCESSING                │
       │                                    │
       │  (DIFFERENTIAL SIGNAL              │
       │  GENERATION PROCESSING)            │
       │  (INTEGRATION SIGNAL               │
       │  GENERATION PROCESSING)            │
       │  (PROPORTIONAL SIGNAL              │
       │  GENERATION PROCESSING)            │
       │  (ADDITION PROCESSING)             │
       └───────────────────────────────────┘
                         │
                         ▼
       ┌───────────────────────────────────┐
       │   SPACE STABILIZATION              │  ⟋ S5
       │   CONTROL PROCESSING               │
       └───────────────────────────────────┘
```

11

Fig. 5

Fig. 6

EP 2 966 530 A1

Fig. 7

EP 2 966 530 A1

## INTERNATIONAL SEARCH REPORT

| International application No. |
| --- |
| PCT/JP2014/001173 |

A. CLASSIFICATION OF SUBJECT MATTER
*G05D3/00*(2006.01)i, *G01C19/02*(2006.01)i, *G05B11/36*(2006.01)i

According to International Patent Classification (IPC) or to both national classification and IPC

B. FIELDS SEARCHED

Minimum documentation searched (classification system followed by classification symbols)
G05D3/00, G01C19/02, G05B11/36

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2010-282465 A (Mitsubishi Electric Corp.), 16 December 2010 (16.12.2010), entire text; all drawings (Family: none) | 1-8 |
| A | JP 2001-290540 A (Mitsubishi Electric Corp.), 19 October 2001 (19.10.2001), entire text; all drawings (Family: none) | 1-8 |
| A | JP 2010-231371 A (Toshiba Corp.), 14 October 2010 (14.10.2010), entire text; all drawings & US 2010/0246886 A1 | 1-8 |

☒ Further documents are listed in the continuation of Box C.    ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 April, 2014 (30.04.14) | 13 May, 2014 (13.05.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2014/001173 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-276722 A  (Futaba Corp.), 12 October 1999 (12.10.1999), entire text; all drawings & US 6227482 B1          & DE 19913651 A1 & KR 10-2000-0005617 A | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2287274 A

- JP 2013045561 A